# EUROPEAN PATENT SPECIFICATION

(11) **EP 4 420 992 B1**
(45) Date of publication and mention of the grant of the patent: **22.10.2025**
(21) Application number: 23216831.0
(22) Date of filing: 14.12.2023
(51) Int. Cl.: B65D 5/00

(54) **PACKAGING BOX**
VERPACKUNGSSCHACHTEL
BOÎTE D'EMBALLAGE

(30) Priority: 23.02.2023 CN 202320390283 U
(43) Date of publication of application: 28.08.2024
(73) Proprietor: ShenZhen YUTO Packaging Technology Co., Ltd, Shenzhen City, Guangdong 518108 (CN)
(72) Inventor: GUO, Zhongqiang, Shenzhen City, Guangdong 518108 (CN); LIANG, Yuansheng, Shenzhen City, Guangdong 518108 (CN)
(74) Representative: Angerhausen, Christoph

(56) References cited:
- CN-A- 105 620 845
- CN-A- 109 693 853
- CN-U- 203 392 095
- CN-U- 215 437 368
- US-A1- 2005 279 668
- US-A1- 2007 187 290

## Description

### TECHNICAL FIELD

The present disclosure relates to the technical field of packaging, and in particular to a packaging box.

### BACKGROUND

At present, in a packaging box on the market, a flip cover is usually open to see a single display effect or a single combination effect of products in the box. And in very few packaging boxes with different display functions on the market, when the box is open, only one product in the box, or only another product in the box can be seen. It is impossible to display all the products in the box at the same time.

CN215437368U discloses a packaging box. The packaging box comprises a surrounding plate, a bottom box, a first upper box and a second upper box. The surrounding plate comprises a bottom plate, a first side plate, a second side plate, a first upper cover plate, a second upper cover plate, a first inserting plate and a second inserting plate. The second inserting plate, the second upper cover plate, the second side plate, the bottom plate, the first side plate, the first upper cover plate and the first inserting plate are sequentially connected in a bendable way. The bottom box is arranged on the bottom plate. The first upper box is arranged on the first side plate. The first inserting plate closes a first opening of the first upper box after being turned over. The second upper box is arranged on the second side plate. The second inserting plate closes a second opening of the second upper box after being turned over. When the first side plate and the second side plate are turned over, the first inserting plate and the second inserting plate close the first opening of the first upper box. The first upper box and the second upper box cover the bottom box, and the first inserting plate and the second inserting plate abut against each other.

CN105620845A discloses a combined set of a laminated outer packing box and a hollow small box with a perfuming function. The outer packing box comprises three inner boxes, i.e., a left, middle and right inner boxes, and an integral box skin for wrapping the three inner boxes. The left and right inner boxes can be put on the middle inner box through multiple folding lines on the integral box skin, and are covered and closed through a special area. An openable hollow pattern window is formed in each hollow small box. When the hollow pattern window is opened, fragrance on a fragrance strip in the outer packing box can enter cigarettes in the box through the hollow pattern windows.

CN203392095U discloses an outer packaging box of fine cigarettes. The outer packaging box of the fine cigarettes comprises a rectangular hardboard and three opened box bodies. The rectangular hardboard is folded through three folding lines which are arranged on the rectangular hardboard to form a cuboid. The rectangular hardboard is divided into the packaging box bottom wall, a packaging box side wall, a packaging box top wall and a packaging box side wall sealing portion through the three folding lines. The three opened box bodies are fixed on the packaging box bottom wall, the packaging box side wall and the packaging box top wall in a matched mode respectively. The rectangular hardboard with the folding lines and the three opened box bodies form a relatively closed box body together.

### SUMMARY

In view of the above technical problem, the present disclosure provides a packaging box that can be changed into structures of different shapes, so the products in the box can be displayed in a variety of ways, which is beneficial to meet different needs of users.

The invention is defined by a packaging box according to claim 1.

Optionally, along the first direction, the bottom wall is spaced apart from the first accommodating portion, and a cavity is formed between the bottom wall and the first accommodating portion.

Optionally, the packaging box further includes a plurality of magnetic members, and the first box body, the second box body, the third box body and the connecting assembly are respectively provided with the magnetic members.

The packaging box provided by the invention includes the first box body, the second box body, the third box body and the connecting assembly, and can be switched between the first state and the second state. Each of the first box body, the second box body and the third box body has the accommodating chamber for accommodating products. In the first state, the connecting plates arranged in pairs are attached to the side walls of the first box body in the second direction, and the second box body and the third box body jointly close the first opening of the first box body along the first direction, thereby facilitating the display of products in the second box body and the third box body. In the second state, the connecting plates arranged in pairs are at least partially separated from the side walls, and the first opening is open to facilitate the display of products in the first box body, the second box body and the third box body. By changing a positional relationship between the connecting assembly and the first box body, the packaging box can be switched between different states, to have various combined structures of different shapes and product display effects in various ways.

### BRIEF DESCRIPTION OF THE DRAWINGS

Drawings are incorporated in and constitute a part of the description, illustrate embodiments consistent with the present disclosure and, together with the description, serve principles of the present disclosure. In order to more clearly illustrate technical solutions of embodiments of the invention, drawings that need to be used in the description of the invention will be briefly introduced below.
FIG. 1 is a schematic structural view of a packaging box according to the invention in a first state;
FIG. 2 is another schematic structural view of a packaging box according to the invention in a first state;
FIG. 3 is a schematic structural view of a packaging box according to the invention in a second state;
FIG. 4 is another schematic structural view of a packaging box according to the invention in a second state;
FIG. 5 is another structural schematic view of a packaging box according to the invention in a second state;
FIG. 6 is another structural schematic view of a packaging box according to the invention in a second state;
FIG. 7 is another structural schematic view of a packaging box according to the invention in a second state;
FIG. 8 is another structural schematic view of the packaging box according to the invention in a second state.

### Reference signs:

10-first box body; 11-first accommodating portion; 11a-first accommodating chamber; 11b-first opening; 12-side wall; 13-bottom wall; 13a-cavity;
20- second box body; 21a- second accommodating chamber; 21b- second opening;
30- third box body; 31a- third accommodating chamber; 31b- third opening;
40-connecting plate; 41-first plate; 42-second plate; 421-first sub-plate; 422-second sub-plate;
X-first direction; Y-second direction; Z-third direction.

### DETAILED DESCRIPTION

Reference will now be made in detail to exemplary embodiments of the invention which are illustrated in drawings. When the following description refers to the drawings, the same numerals in different drawings refer to the same or similar elements unless otherwise indicated. The implementations described in the following exemplary embodiments do not represent all implementations consistent with the invention. Rather, they are merely examples of a packaging box according to the invention as defined in the appended claims.

It should be understood that the specific embodiments described here are only used to explain, and not to limit the invention which is defined in the appended claims.

The applicant found that, at present, a packaging box on the market usually has a design of a flip cover, and only a single display effect or a single combination effect of products in the box can be seen. And for some packaging boxes with different display functions, one of the products in the box can be seen, or only another product in the box can be seen when the packaging box is open. All the products in the box cannot be displayed at the same time, which affects the display of the products in the packaging box and limits needs of users.

In view of the above analysis, the applicant proposed a packaging box, including a first box body, a connecting assembly, a second box body and a third box body. By changing the positional relationship between the connecting assembly and the first box body, the packaging box can be switched between different states, thus the packaging box has various combined structures of different shapes and product display effects in various ways under various combined structures of different shapes, which is beneficial to improve the versatility and universality of the packaging box, and can meet the needs of different users.

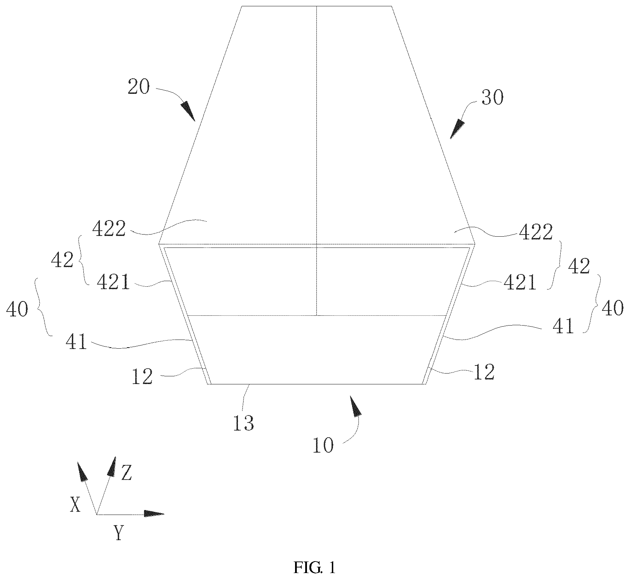

Referring to FIG. 1 to FIG. 8, embodiments of the invention provide a packaging box, including a first box body 10, a connecting assembly, a second box body 20 and a third box body 30. The first box body 10 includes a first accommodating portion 11. The first accommodating portion 11 has a first accommodating chamber 11a and a first opening 11b communicated with the first accommodating chamber 11a in a first direction X. The connecting assembly includes connecting plates 40 arranged in pairs and distributed oppositely on both sides of the first box body 10 in a second direction Y. The second direction Y intersects the first direction X. The second box body 20 is connected with one of the connecting plates 40 arranged in pairs and has a second accommodating chamber 21a. The third box body 30 is connected with the other of the connecting plates 40 arranged in pairs and has a third accommodating chamber 31a. The packaging box is switchable between a first state and a second state to close or open the first opening 11b.

The packaging box has a three-dimensional structure arranged along the first direction X, the second direction Y and the third direction Z. The packaging box can be placed on a stable plane. For the convenience of illustration, the packaging box is placed on a horizontal plane. In this case, the top in a vertical direction corresponds to the top, and the bottom in the vertical direction corresponds to the bottom.

However, the packaging box can also be placed on a surface inclined relative to the horizontal plane in a stable state.

The first box body 10 includes the first accommodating portion 11, and the first accommodating portion 11 has the first accommodating chamber 11a and the first opening 11b communicated with the first accommodating chamber 11a in the first direction X. In practical application of the packaging box, the first accommodating chamber 11a can be used to accommodate products, and does not limit the type of products. Users can view or take and place the products in the first box body 10 through the first opening 11b.

The second box body 20 includes the second accommodating chamber 21a, and the third box body 30 includes the third accommodating chamber 31a. In practical application of the packaging box, both the first accommodating chamber 11a and the second accommodating chamber 21a can be used to accommodate products.

Optionally, the first accommodating chamber 11a, the second accommodating chamber 21a and the third accommodating chamber 31a can accommodate the same type of products, of course, they can also accommodate different products.

Optionally, shapes and sizes of the second box body 20 and the third box body 30 can be the same, of course, can also be set to be different. That is, the volume of the second accommodating chamber 21a and the volume of the third housing chamber 31a can be the same, can also be different.

Optionally, the first accommodating chamber 11a, the second accommodating chamber 21a, and the third accommodating chamber 31a can be provided with the same or different accommodating clips, thus the products in the box can be kept relatively fixed with the packaging box of the embodiments of the present disclosure, which is beneficial to improve the stability and reliability of the structure of the packaging box. Of course, the first accommodating chamber 11a, the second accommodating chamber 21a and the third accommodating chamber 31a may not be provided with clips, which is beneficial to improve the versatility of the product, thus the packaging box can accommodate a variety of different types of products.

The packaging box is switchable between the first state to close the first opening 11b and the second state to open the first opening 11b. When the packaging box is in the first state, the first opening 11b is closed, and when the packaging box is in the second state, the first opening 11b is open.

In the first state, the connecting plates 40 arranged in pairs are attached to side walls 12 of the first box body 10 in the second direction Y, and the second box body 20 and the third box body 30 jointly close the first opening 11b along the first direction X. In the second state, the connecting plates 40 arranged in pairs are at least partially separated from the side walls 12, and the first opening 11b is open.

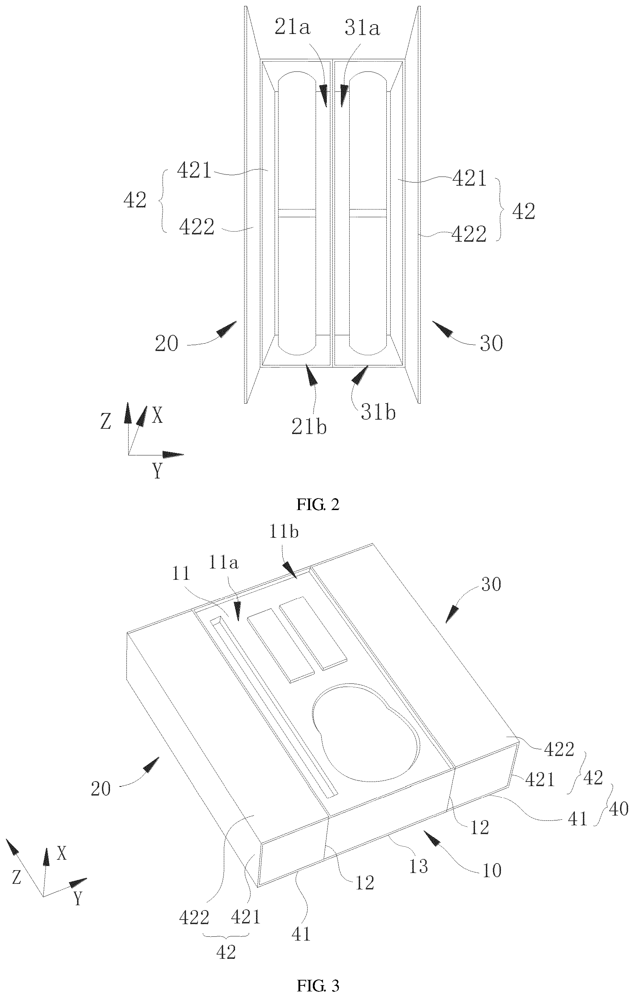

As shown in FIG. 1 and FIG. 2, FIG. 1 and FIG. 2 respectively represent a structural schematic view of the packaging box in the first state. When the packaging box is in the first state, the connecting plates 40 arranged in pairs are respectively attached to the side walls 12 of the first box body 10 in the second direction Y, and the second box body 20 and the third box body 30 jointly close the first opening 11b along the first direction.

Optionally, in the first state, the second box body 20, the third box body 30, and the first box body 10 are stacked along the first direction X, and are all clamped between the connecting plates 40 opposite to each other, to close the first opening 11b.

The packaging box in the first state as shown in FIG. 1 is convenient for transportation and carrying, the products in the first box body 10, the second box body 20 and the third box body 30 are prevented from falling out to improve the protection of the products, which is beneficial to improve the reliability of the packaging box.

In the packaging box in the first state as shown in FIG. 2, the second box body 20 and the third box body 30 can be open to display the products in the box body. When the user only wants to open the second box body 20 and/or the third box body 30, it is convenient for the user to view or take and place the products in the second box body 20 and the third box body 30.

The first box body 10 includes a bottom wall 13 disposed opposite to the first opening along the first direction X, and the connecting plates 40 arranged in pairs are bendable relative to and connected with the bottom wall 13 .

The bottom wall 13 is a structure located at the bottom of the first box body 10, that is, a structure on a side away from the second box body 20 and/or the third box body 30 along the first direction X in the first state. Optionally, the bottom wall 13 can have a plate-shaped structure, and of course, it can also have a curved surface structure, a wave structure, and the like.

By the connecting plates 40 bendable relative to and connected with the bottom wall 13, it is beneficial to change the positional relationship between the connecting assembly and the first box body 10, thus the packaging box has various combined structures of different shapes with simple structures and easy operations. In addition, by the connection between the connecting plates 40 and the bottom wall 13 of the first box body 10, it is also beneficial to save costs and facilitate processing.

The description of the process of changing the shape and structure of the packaging box is facilitated with the help of a first surface and a second surface. As shown in FIG. 1, a side of the first box body 10 close to the second box body 20 along the first direction X is defined as the first surface, and a side of the first box body 10 away from the second box body 20 along the first direction X is defined as the second surface. When the packaging box is deformed to change into a different state, a bending toward a direction of the first surface means that an angle less than 180° is formed between first surfaces of two parts that are relatively bent, and an angle greater than 180° is formed between second surfaces. Correspondingly, bending toward a direction of the second surface means that an angle smaller than 180° is formed between the second surfaces of the two parts that are relatively bent, and an angle greater than 180° is formed between the first surfaces, which will not be described in detail in the present disclosure.

By the connecting plates 40 arranged opposite to each other bendable relative to and connected with the bottom wall 13, and when the angle between the connecting plates 40 and the bottom wall 13 is a certain angle, the connecting plates 40 arranged in pairs are respectively attached to the side walls 12 of the first box body 10 in the second direction Y and are connected with the second box body 20 and the third box body 30 respectively, to set the packaging box in the first state. By the connecting plates 40 in the first state turned by a certain angle along the direction of the second surface, the connecting plates 40 arranged in pairs are at least partially separated from the side walls 12, the first opening 11 b is open, and the packaging box is in the second state.

Each of the connecting plates 40 includes a first plate 41 and a second plate 42 that are bendable relative to and connected with each other. The second box body 20 is connected with one of second plates 42 arranged in pairs, and the third box body 30 is connected with the other of the second plates 42 arranged in pairs. In the first state, the first plates 41 arranged in pairs are respectively attached to the side walls 12 of the first box body 10 in the second direction Y; in the second state, the first plates 41 arranged in pairs are respectively at least partly separated from the side walls 12.

Through the above arrangement, it is beneficial to bend the connecting plates 40 to change the positional relationship between the connecting assembly and the first box body 10, thus the packaging box has various combined structures of different shapes and product display effects in various ways with simple structures and easy operations.

Each first plate 41 is disposed between the bottom wall 13 and a respective second plate 42, and is bendable relative to and connected with both the first wall 13 and the second plate 42.

The second box body 20 has the second opening 20b communicated with the second accommodating chamber 20a in the first direction X. The third box body 30 has the third opening 30b communicated with the third accommodating chamber 30a in the first direction X. Each second plate 42 includes a first sub-plate 421 and a second sub-plate 422 that are bendable relative to and connected with each other. The first sub-plate 421 is disposed between the first plate 41 and the second sub-plate 422, and is bendable relative to and connected with both the first plate 41 and the second sub-plate 422. One of second sub-plates 422 arranged in pairs can be arranged to close the second opening 20b, and the other of the second sub-plates 422 arranged in pairs can be arranged to close the third opening 30b.

Through the above arrangement, it is beneficial to ensure that the connecting plates 40 are bendable to change the effectiveness of the positional relationship between the connecting assembly and the first box body 10, thus the packaging box has various combined structures of different shapes and product display effects in various ways with simple structures and easy operations.

The second sub-plate 422 is a structure located on the top of the second box body 20, i.e., a structure on a side away from the first box body 10 along the first direction X in the first state. Correspondingly, the first sub-plate 421 is a structure located on the top of the second box body 20, i.e., a structure on a side away from the first box body 10 along the first direction X in the first state.

By the first sub-plate 421 and the second sub-plate 422 provided in such a way that they are bendable relative to and connected with the connecting plates 40 respectively, the user can turn the first sub-plate 421 to open the second opening 21b, to display the products in the second accommodating chamber 21a of the second box body 20, which is convenient for the user's demand for observing or taking. And/or, the user can turn the second sub-plate 422 to open the third opening 31b, to display the products in the third accommodating chamber 31a of the third box body 30, which is convenient for the user's demand for observing or taking. Moreover, by the second opening 20b and the third opening 30b provided in the first direction X, it is convenient for the user to view or take and place the products in the second box body 20 and the third box body 30, and improve the versatility of the packaging box of the present disclosure.

The second state includes a first sub-state and a second sub-state, and the packaging box is switchable between the first sub-state and the second sub-state. In the first sub-state, the connecting plates 40 arranged in pairs are respectively arranged on both sides of the first box body 10 along the second direction Y, and in the second sub-state, the connecting plates 40 arranged in pairs are both arranged on one side of the first box body 10 along the first direction X.

The packaging box can be changed between the first state and the second state, the second state includes the first sub-state and the second sub-state, and the packaging box can be changed between the first sub-state and the second sub-state. That is to say, the packaging box provided in the embodiments of the present disclosure is switchable among the first state, the first sub-state and the second sub-state.

Referring to FIG. 3 to FIG. 6, the packaging box may include two different shapes and structures in the first sub-state, and FIG. 3 to FIG. 6 may respectively show the structural diagrams of the packaging box in the first sub-state.

The connecting plates 40 arranged in pairs in the packaging box in the first state (as shown in FIG. 1) are at first respectively turned by a certain angle towards the direction of the second surface, and then turned by a certain angle towards the direction of the first surface, to locate the connecting plates 40 arranged in pairs respectively on both sides of the first box body 10 in the second direction Y and at least partially separate them from the side walls 12, and open the first opening 11b. In this case, the packaging box is changed from the first state transitions to the first sub-state of the second state, and the packaging box is in a first shape and structure in the first sub-state (as shown in FIG. 3).

Exemplarily, the connecting plates 40 arranged in pairs in the packaging box in the first state are at first turned by 90° towards the direction of the second surface, and then turned by 90° towards the direction of the first surface, thus the packaging box is in the first shape and structure in the first sub-state.

Specifically, the first plates 41 arranged in pairs in the packaging box in the first state are respectively turned by 90° towards the direction of the second surface with respect to the bottom wall 13, and then the second plates 42 arranged in pairs and/or the first sub-plates 421 arranged in pairs are turned by 90° towards the direction of the first surface relative to the first plate 41, thus the packaging box is changed from the first state (as shown in FIG. 1 ) to the first shape and structure in the first sub-state (As shown in FIG. 3).

In this case, the second box body 20 is located on one side of the first box body 10 in the second direction Y and is attached to the first box body 10, and the third box body 30 is located on other side of the first box body 10 in the second direction Y and is attached to the first box body 10, to open the first opening 11b. The user can observe the products in the first accommodating portion 11 through the first opening 11b, or take and place them in the first accommodating portion 11 through the first opening 11b.

In addition, the first sub-plate 421 and the second sub-plate 422 are respectively turned by a certain angle toward the direction away from each other and toward the direction of the second surface, to open both the second opening 21b and the third opening 31b. The user can observe the products in the second box body 20 through the second opening 21b, or take and place the products in the second box body 20 through the second opening 21b. Correspondingly, the user can observe the products in the third box body 30 through the third opening 31b, or take and place the products in the second box body 20 through the third opening 31b.

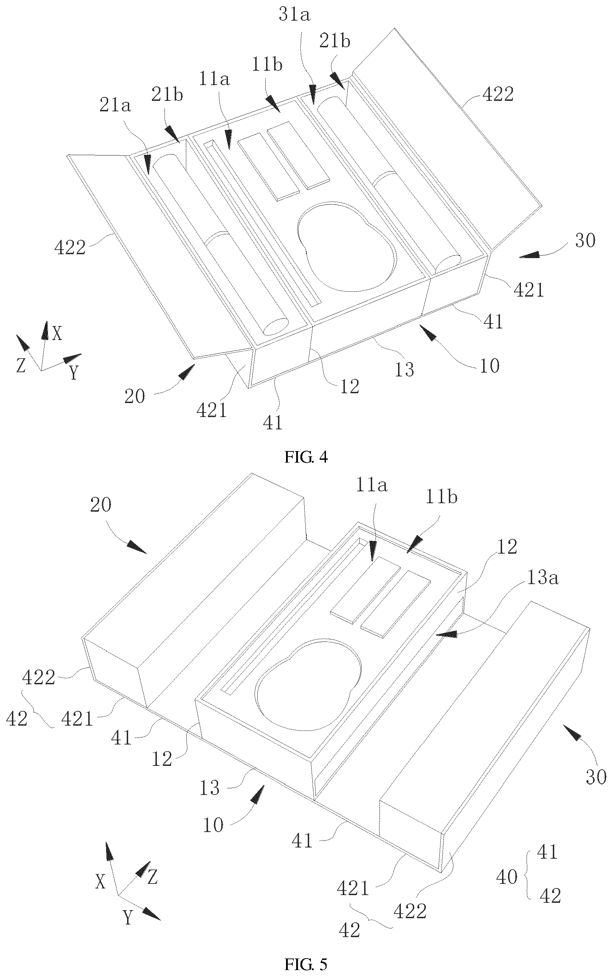

Optionally, the connecting plates 40 arranged in pairs in the packaging box in the first state (as shown in FIG. 1) are at first turned by at a certain angle toward the direction of the second surface, to locate the connecting plates 40 arranged in pairs respectively on two sides of the first box body 10 in the second direction Y and are at least partially separate them from the side walls 12, and open the first opening 11b. In this case, the packaging box is changed from the first state to the first sub-state of the second state, and the packaging box is in a second shape and structure in the first sub-state (as shown in FIG. 5).

Exemplarily, the connecting plates 40 arranged in pairs in the packaging box in the first state are turned by 90° toward the direction of the second surface, thus the packaging box is in the second shape and structure in the first sub-state.

Specifically, the first plates 41 arranged in pairs in the packaging box in the first state are turned by 90° towards the direction of the second surface with respect to the bottom wall 13, thus the packaging box is changed from the first state (as shown in FIG. 1) to the second shape and structure in the first sub-state (as shown in FIG. 5).

In this case, the second box body 20 is located on one side of the first box body 10 in the second direction Y and is spaced apart from the first box body 10, and the third box body 30 is located on the other side of the first box body 10 in the second direction Y and is spaced apart from the first box body 10, to open the first opening 11b. The user can observe the products in the first accommodating portion 11 through the first opening 11b, or take and place the products in the first accommodating portion 11 through the first opening 11b.

In addition, the first sub-plate 421 and the second sub-plate 422 are respectively turned by a certain angle toward the direction away from each other and toward direction of the second surface, to open both the second opening 21b and the third opening 31b. The user can observe the products in the second box body 20 through the second opening 21b, or take and place the products in the second box body 20 through the second opening 21b. Correspondingly, the user can observe the products in the third box body 30 through the third opening 31b, or take and place the products in the third box body 30 through the third opening 31b.

Through the above arrangement, when the packaging box is in the first sub-state, the products in the first box body 10 can be visually displayed, and the second box body 20 and the third box body 30 can also be open according to user's needs, to display the products in the first box body 10, the second box body 20 and the third box body 30. That is to say, the packaging box proposed by the present disclosure can display some of the products, and can also display all products at the same time, which is beneficial to improve the versatility of the packaging box to meet different users' needs.

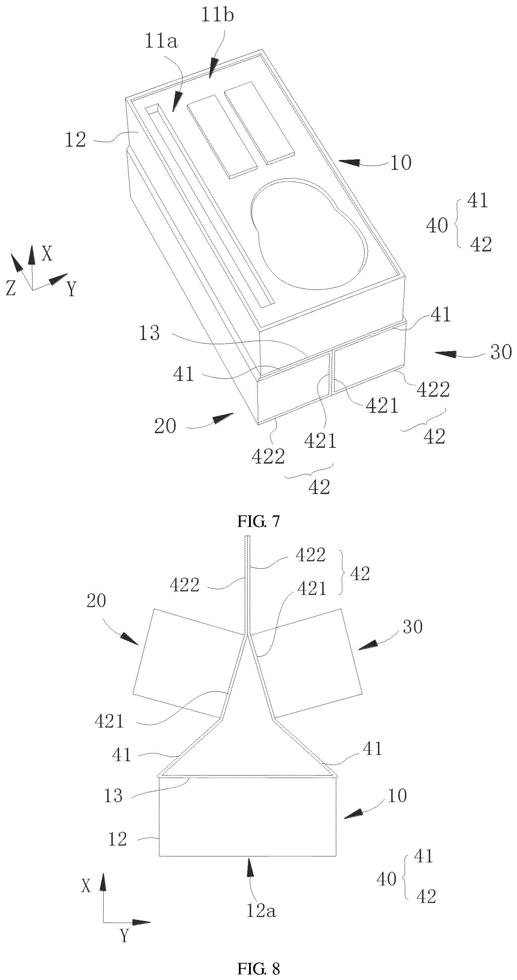

Referring to FIG. 7 and FIG. 8, the packaging box may include two different shapes and structures in the second sub-state. FIG. 7 and FIG. 8 can respectively show structural diagrams of the packaging box in the first sub-state.

Optionally, the connecting plates 40 arranged in pairs in the packaging box in the first state (as shown in FIG. 1) are at first respectively turned by at a certain angle toward the direction of the second surface, and then turned by a certain angle toward the direction of the first surface, and then turned by a certain angle toward the direction of the second surface, to locate both the connecting plates 40 arranged in pairs on a bottom wall (1) of the first box body 10 away from the first opening 11b in the first direction X and separate them from the side walls 12, and open the second opening 11b. In this case, the packaging box is changed from the first state to the second sub-state of the second state, and the packaging box is in the first shape and structure in the second sub-state (as shown in FIG. 7).

Exemplarily, the connecting plates 40 arranged in pairs in the packaging box in the first state are at first respectively turned by 90° toward the direction of the second surface, then turned by 90° toward the direction of the first surface, and then turned by 180° toward the direction of the second surface, thus the packaging box is in the first shape and structure in the second sub-state.

Specifically, the first plates 41 arranged in pairs in the packaging box in the first state are turned by 90° toward the direction of the second surface with respect to the bottom wall 13, and then the second plates 42 arranged in pairs and/or first sub-plates 421 arranged in pairs are turned by 90° toward the direction of the first surface with respect to the first plate 41, and then both the first plates 41 arranged in pairs are turned by 180° toward the direction of the second surface with respect to the bottom wall 13, thus the packaging box is changed from the first state (as shown in FIG. 1) to the first shape and structure in the second sub-state (as shown in FIG. 7).

In this case, the second box body 20 and the third box body 30 are respectively located on a side of the first box body 10 away from the first opening 11b in the first direction Y, and are attached to the first box body 10, to open the first opening 11b. The user can observe the products in the first accommodating portion 11 through the first opening 11b, or take and place the products in the first accommodating portion 11 through the first opening 11b.

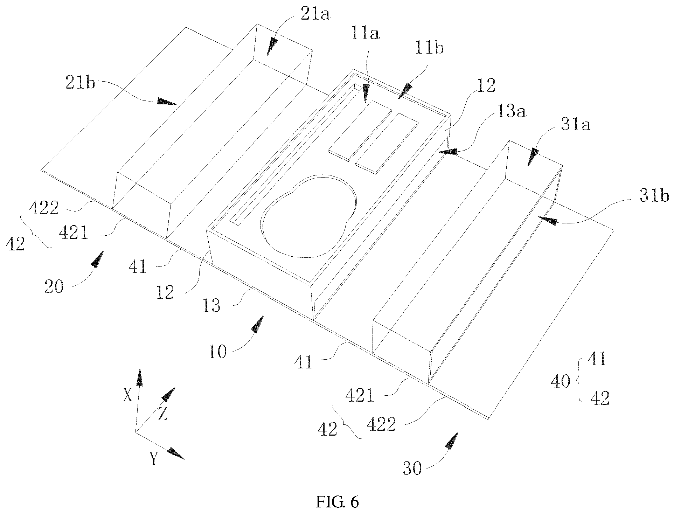

Optionally, the packaging box in the second shape and structure in the first sub-state in the second state (as shown in FIG. 6) is turned by 180°, to respectively move the first sub-plate 421 and the second sub-plate 422 toward each other along the second direction Y to be attached to each other, thus both the connecting plates 40 arranged in pairs are respectively arranged on the side of the first box body 10 away from the first opening 11b in the first direction X and separated from the side wall 12, to open the first opening 11b. In this case, the packaging box is changed from the first state to the second sub-state of the second state, and the packaging box is in the second shape and structure in the second sub-state (as shown in FIG. 8).

In this case, the second box body 20 and the third box body 30 are respectively located on the side of the first box body 10 away from the first opening 11b in the first direction Y and are spaced apart from the first box body 10. The user can lift the packaging box through the first sub-plate 421 and the second sub-plate 422 attached to each other, which is beneficial to improve the functionality of the packaging box and improve the fun of using the packaging box of the present disclosure to meet users' different needs.

It can be understood that the above embodiment is only an example of the turning process of the connecting plates 40 in which the packaging box is changed from the second shape and structure in the first sub-state to the second shape and structure in the second sub-state. The proposed packaging box can also be changed from other states to the second shape and structure in the second sub-state, and is not limited thereto.

Optionally, as shown in FIG. 1 and FIG. 2, in the first state, the angle between one of the connecting plates 40 attached to the side walls 12 of the first box body 10 and the bottom wall 13 is 90°. That is, the orthographic projection of the connecting plates 40 attached to the side walls 12 of the first box body 10 and the bottom wall 13 in the first direction X has an L-shaped structure.

Exemplarily, in the first state, the angle between the first plate 41 and the bottom wall 13 is 90°.

Optionally, in the second state, the angle between one of the connecting plates 40 at least partially separated from the side walls 12 and the bottom wall 13 is larger than 90°.

Exemplarily, as shown in FIG. 3 to FIG. 6, in the first sub-state, the angle between one of the connecting plates 40 at least partially separated from the side walls 12 and the bottom wall 13 is 180°. That is, the orthographic projection of one of the connecting plates 40 at least partly separated from the side walls 12 and the bottom wall 13 in the first direction X has a linear structure.

Exemplarily, in the first sub-state, the angle between the first plate 41 and the bottom wall 13 is 180°.

Exemplarily, as shown in FIG. 7, in the second sub-state, the angle between one of the connecting plates 40 at least partially separated from the side walls 12 and the bottom wall 13 is 360°. That is, the connecting plates 40 at least partially separated from the side walls 12 is and the bottom wall 13 are stacked in the first direction X. Alternatively, as shown in FIG. 8, the angle between one of the connecting plates 40 at least partially separated from the side walls 12 and the bottom wall 13 is between 120° and 160°, forming a " 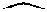 " -shaped structure.

Exemplarily, in the second sub-state, the angle between the first plate 41 and the bottom wall 13 is 360° or between 120° and 160°.

The packaging box can be changed in various shapes and structures. It is only necessary to turn the connecting plates 40 to change the connection between the connecting plates 40 and the first box body 10, which is convenient for operation and can improve the functionality, versatility and fun of the packaging box to meet users' different needs.

According to the invention, in the first state, the length of the first plate 41 in the first direction X is the same as the length of the side wall 12 in the first direction X.

Through the above arrangement, it is beneficial to ensure the cleanness of the products in the first accommodating chamber 11a, and prevent external foreign particles from entering the first accommodating chamber 11a from a gap between the first box body 10 and the first plate 41 to destroy internal products, which is beneficial to improve the protection of the product and improve the safety and reliability of the packaging box.

At the same time, it is also beneficial to turn the connecting plate 40, thus the packaging box has a variety of different shapes and structures, thereby improving the multi-functionality of the packaging box and meeting users' different needs.

According to the invention, in the first state, the length of the first plate 41 in the first direction X is the same as the length of the second box body 20 and the third box body 30 in the second direction Y.

Through the above arrangement, it is beneficial to turn the connecting plate 40, thus the packaging box has a variety of different shapes and structures, thereby improving the multi-functionality of the packaging box and meeting users' different needs. At the same time, it is beneficial to improve the aesthetics of the packaging box.

Optionally, in the first state, the length of the side wall 12 in the first direction X is the same as the length of the second box body 20 and/or the third box body 30 in the second direction Y.

Optionally, in the first state, the length of the first sub-plate 421 in the first direction X is the same as the length of the second sub-plate 422 in the second direction Y.

Referring to FIG. 5 and FIG. 6, in some optional embodiments, along the first direction X, the bottom wall 13 is spaced apart from the first accommodating portion 11, and a cavity 13a is formed between the bottom wall 13 and the first accommodating portion 11.

Optionally, in the first direction X, the length of the first accommodating portion 11 is greater than the minimum distance between the first accommodating portion 11 and the bottom wall 13. Small items, such as a product specification, can be place in the cavity 13a.

Optionally, the first box body 10 has a fourth opening communicated with the cavity 13a in the second direction Y. One fourth opening may be provided, and of course, two fourth openings may also be provided.

Since the second box body 20 and the third box body 30 are respectively located on both sides of the first box body 10 in the second direction Y and are spaced apart from the first box body 10, the products in the cavity 13a can be taken out from a side close to the second box body 20 along the second direction Y, or, from a side close to the third box body 30 along the second direction Y.

The packaging box can be changed to the second state, and specifically, changed to the second shape and structure in the first sub-state, thus the items in the cavity 13a can be displayed or taken or placed, which is beneficial to improve the multi-functionality of the packaging box.

According to the invention, the first box body 10, the second box body 20 and the third box body 30 have a rectangular structure.

Through the above arrangement, it is beneficial for the packaging box to be changed in different states to have different shapes and structures to meet different user's needs. Optionally, in the third direction Z, orthographic projections of the second box body 20 and the third box body 30 are both square.

In some optional embodiments, the packaging box further includes a plurality of magnetic members, and each of the first box body 10, the second box body 20, the third box body 30 and the connecting assembly is provided with the magnetic members.

The packaging box may further include a plurality of magnetic members, thus the packaging box can have a stable structure under different states, which is beneficial to protect the products in the box and prevent the products in the box from falling out, and. Furthermore, through the above arrangement, it is also beneficial for the opening, closing and operation of the packaging box to save operation time. When the packaging box is in the first state, sides of the first sub-plate 421 and the second sub-plate 422 close to each other in the second direction Y are respectively provided with the magnetic members. The first sub-plate 421 and the second sub-plate 422 can magnetically attached through the magnetic members to close the second opening 21b and the third opening 31b. Sides of the second box body 20 and the third box body 30 close to each other in the second direction Y are respectively provided with the magnetic members, and the second box body 20 and the third box body 30 are arranged to close the first opening 11b.

Optionally, a magnetic attraction effect can occur between the magnetic members on the first sub-plate 421 and the magnetic members on a side of the second box body 20 close to the third box body 30 in the second direction Y, thus the first sub-plate 421 is attached to a side of the second box body 20 close to the third box body 30 in the second direction Y.

Correspondingly, a magnetic attraction effect can occur between the magnetic members on the second sub-plate 422 and the magnetic members on a side of the third box body 30 close to the second box body 20 in the second direction Y, thus the second side wall 12 is attached to a side of the third box body 30 close to the third box body 30 in the second direction Y.

The above embodiments only use the position of the magnetic members in the first state of the packaging box as an example for illustration, and the positions of the magnetic members in other states will not be repeated here.

Optionally, the first box body 10, the second box body 20, the third box body 30 and the connecting assembly may be provided with one or two magnetic members respectively, and of course, also provided with a plurality of the magnetic members.

Through the above arrangement, the magnetic members are used to absorb and fix the configuration, which is beneficial to improve the reliability of the fixing and configuration of the packaging box, and it is easy to close and change the state of the packaging box. Thus the packaging box has various combined structures of different shapes, which is easy to operate and has strong functionality.

The invention is defined in the appended claims.

## Claims

1. A packaging box, comprising:
a first box body (10) comprising a first accommodating portion (11), and the first accommodating portion (11) having a first accommodating chamber (11a) and a first opening (11b) communicating with the first accommodating chamber (11a) in a first direction (X);
a connecting assembly comprising connecting plates (40) arranged in pairs and distributed opposite to each other on two sides of the first box body (10) in a second direction (Y), and the second direction (Y) intersecting the first direction (X);
a second box body (20) connected with one of the connecting plates (40) arranged in pairs and having a second accommodating chamber (21a);
a third box body (30) connected with the other of the connecting plates (40) arranged in pairs and having a third accommodating chamber (31a);
wherein the packaging box is switchable between a first state to close the first opening (11b) and a second state to open the first opening (11b);
wherein the first box body (10) comprises a bottom wall (1) arranged opposite to the first opening (11b) along the first direction (X), and the connecting plates (40) arranged in pairs are bendable relative to and connected with the bottom wall (13);
wherein each of the connecting plates (40) comprises a first plate (41) and a second plate (42) that are bendable relative to and connected with each other, the second box body (20) is connected with one of second plates (42) arranged in pairs, and the third box body (30) is connected with the other of the second plates (42) arranged in pairs;
wherein the second box body (20) has a second opening (21b) that is adapted, in the first state and the second state, to communicate with the second accommodating chamber (21a) in the first direction (X), and the third box body (30) has a third opening (31b) that is adapted, in the first state and the second state, to communicate with the third accommodating chamber (31a) in the first direction (X);
wherein, in the first state, a length of each first plate (41) in the first direction (X) is the same as that of a respective side wall (12) in the first direction (X);
wherein the first box body (10), the second box body (20) and the third box body (30) are each formed in a rectangular structure;
wherein the second state comprises a first sub-state and a second sub-state, and the packaging box is switchable between the first sub-state and the second sub-state; and
in the first sub-state, the connecting plates (40) arranged in pairs are respectively arranged on two sides of the first box body (10) along the second direction (Y), and in the second sub-state, the connecting plates (40) arranged in pairs are both arranged on the bottom of the first box body (10);
wherein in the first state, the first plates (41) arranged in pairs are respectively attached to side walls (12) of the first box body (10) in the second direction (Y);
wherein in the second state, the first plates (41) arranged in pairs are respectively at least partially separated from the side walls (12);
wherein each of the second plates (42) comprises a first sub-plate (421) and a second sub-plate (422) that are bendable relative to and connected with each other, the first sub-plate (421) is provided between the corresponding first plate (41) and the second sub-plate (422) and is bendable relative to and connected with both the corresponding first plate (41) and the second sub-plate (422), one of second sub-plates (422) arranged in pairs is adapted to close the second opening (21b), and the other of the second sub-plates (422) arranged in pairs is adapted to close the third opening (31b);
**characterised in that**:
in the first state, a length of each first plate (41) in the first direction (X) is the same as that of the second box body (20) and the third box body (30) in the second direction (Y).

2. The packaging box according to claim 1, wherein along the first direction (X), the bottom wall (13) is spaced apart from the first accommodating portion (11), and a cavity (13a) is formed between the bottom wall (13) and the first accommodating portion (11).

3. The packaging box according to claim 1, wherein the packaging box further comprises a plurality of magnetic members, and the first box body (10), the second box body (20), the third box body (30) and the connecting assembly are respectively provided with the magnetic members.

## Patentansprüche

1. Verpackungsbox, umfassend:
einen ersten Boxkörper (10) mit einem ersten Aufnahmeabschnitt (11), wobei der erste Aufnahmeabschnitt (11) eine erste Aufnahmekammer (11a) und eine erste Öffnung (11b) aufweist, die mit der ersten Aufnahmekammer (11a) in einer ersten Richtung (X) in Verbindung steht;
eine Verbindungsanordnung mit paarweise angeordneten Verbindungsplatten (40), die auf zwei Seiten des ersten Boxkörpers (10) in einer zweiten Richtung (Y) einander gegenüberliegend verteilt sind, wobei die zweite Richtung (Y) die erste Richtung (X) schneidet;
einen zweiten Boxkörper (20), der mit einer der paarweise angeordneten Verbindungsplatten (40) verbunden ist und eine zweite Aufnahmekammer (21a) aufweist;
einen dritten Boxkörper (30), der mit der anderen der paarweise angeordneten Verbindungsplatten (40) verbunden ist und eine dritte Aufnahmekammer (31a) aufweist;
wobei die Verpackungsbox zwischen einem ersten Zustand zum Verschließen der ersten Öffnung (11b) und einem zweiten Zustand zum Öffnen der ersten Öffnung (11b) umschaltbar ist,
wobei der erste Boxkörper (10) eine Bodenwand (1) umfasst, die gegenüber der ersten Öffnung (11b) entlang der ersten Richtung (X) angeordnet ist, und die paarweise angeordneten Verbindungsplatten (40) relativ zu der Bodenwand (13) biegbar und mit dieser verbunden sind;
wobei jede der Verbindungsplatten (40) eine erste Platte (41) und eine zweite Platte (42) umfasst, die relativ zueinander biegbar und miteinander verbunden sind, der zweite Boxkörper (20) mit einer der paarweise angeordneten zweiten Platten (42) verbunden ist und der dritte Boxkörper (30) mit der anderen der paarweise angeordneten zweiten Platten (42) verbunden ist;
wobei der zweite Boxkörper (20) eine zweite Öffnung (21b) aufweist, die im ersten Zustand und im zweiten Zustand zur Kommunikation mit der zweiten Aufnahmekammer (21a) in der ersten Richtung (X) angepasst ist, und der dritte Boxkörper (30) eine dritte Öffnung (31b) aufweist, die im ersten Zustand und im zweiten Zustand zur Kommunikation mit der dritten Aufnahmekammer (31a) in der ersten Richtung (X) angepasst ist;
wobei im ersten Zustand die Länge jeder ersten Platte (41) in der ersten Richtung (X) gleich der Länge einer jeweiligen Seitenwand (12) in der ersten Richtung (X) ist;
wobei der erste Boxkörper (10), der zweite Boxkörper (20) und der dritte Boxkörper (30) jeweils in einer rechteckigen Struktur ausgebildet sind;
wobei der zweite Zustand einen ersten Teilzustand und einen zweiten Teilzustand umfasst und die Verpackungsbox zwischen dem ersten Teilzustand und dem zweiten Teilzustand umschaltbar ist; und
in dem ersten Teilzustand die paarweise angeordneten Verbindungsplatten (40) jeweils an zwei Seiten des ersten Boxkörpers (10) entlang der zweiten Richtung (Y) angeordnet sind, und in dem zweiten Teilzustand die paarweise angeordneten Verbindungsplatten (40) beide am Boden des ersten Boxkörpers (10) angeordnet sind;
wobei in dem ersten Zustand die paarweise angeordneten ersten Platten (41) jeweils an Seitenwänden (12) des ersten Boxkörpers (10) in der zweiten Richtung (Y) befestigt sind;
wobei im zweiten Zustand die paarweise angeordneten ersten Platten (41) jeweils zumindest teilweise von den Seitenwänden (12) getrennt sind;
wobei jede der zweiten Platten (42) eine erste Teilplatte (421) und eine zweite Teilplatte (422) umfasst, die relativ zueinander biegbar und miteinander verbunden sind, wobei die erste Teilplatte (421) zwischen der entsprechenden ersten Platte (41) und der zweiten Teilplatte (422) vorgesehen ist und relativ zu sowohl der entsprechenden ersten Platte (41) als auch der zweiten Teilplatte (422) biegbar und damit verbunden ist, eine der paarweise angeordneten zweiten Teilplatten (422) dazu geeignet ist, die zweite Öffnung (21b) zu verschließen, und die andere der paarweise angeordneten zweiten Teilplatten (422) dazu geeignet ist, die dritte Öffnung (31b) zu verschließen;
**dadurch gekennzeichnet, dass**
im ersten Zustand die Länge jeder ersten Platte (41) in der ersten Richtung (X) gleich der Länge des zweiten Boxkörpers (20) sowie des dritten Boxkörpers (30) in der zweiten Richtung (Y) ist.

2. Verpackungsbox nach Anspruch 1, wobei entlang der ersten Richtung (X) die Bodenwand (13) von dem ersten Aufnahmeabschnitt (11) beabstandet ist und ein Hohlraum (13a) zwischen der Bodenwand (13) und dem ersten Aufnahmeabschnitt (11) gebildet ist.

3. Verpackungsbox nach Anspruch 1, wobei die Verpackungsbox ferner eine Vielzahl von magnetischen Elementen umfasst, und der erste Boxkörper (10), der zweite Boxkörper (20), der dritte Boxkörper (30) und die Verbindungsanordnung jeweils mit den magnetischen Elementen versehen sind.

## Revendications

1. Boîte d'emballage, comprenant :
un premier corps de boîte (10) comprenant une première portion d'accueil (11), et la première portion d'accueil (11) comportant une première chambre d'accueil (11a) et une première ouverture (11b) en communication avec la première chambre d'accueil (11a) dans une première direction (X) ;
un ensemble de liaison comprenant des plaques de liaison (40) disposées par paires et réparties à l'opposé l'une de l'autre sur deux côtés du premier corps de boîte (10) dans une deuxième direction (Y), et la deuxième direction (Y) coupant la première direction (X) ;
un deuxième corps de boîte (20) relié à l'une des plaques de liaison (40) disposées par paires et comportant une deuxième chambre d'accueil (21a) ;
un troisième corps de boîte (30) relié à l'autre des plaques de liaison (40) disposées par paires et comportant une troisième chambre d'accueil (31a) ;
dans laquelle la boîte d'emballage est commutable entre un premier état pour fermer la première ouverture (11b) et un deuxième état pour ouvrir la première ouverture (11b) ;
dans laquelle le premier corps de boîte (10) comprend une paroi inférieure (1) disposée à l'opposé de la première ouverture (11b) selon la première direction (X), et les plaques de liaison (40) disposées par paires sont pliables par rapport à la paroi inférieure (13) et reliées à celle-ci ;
dans laquelle chacune des plaques de liaison (40) comprend une première plaque (41) et une deuxième plaque (42) qui sont pliables l'une par rapport à l'autre et reliées l'une à l'autre, le deuxième corps de boîte (20) est relié à l'une des deuxièmes plaques (42) disposées par paires, et le troisième corps de boîte (30) est relié à l'autre des deuxièmes plaques (42) disposées par paires ;
dans laquelle le deuxième corps de boîte (20) comporte une deuxième ouverture (21b) qui est adaptée, dans le premier état et dans le deuxième état, à communiquer avec la deuxième chambre d'accueil (21a) dans la première direction (X), et le troisième corps de boîte (30) comporte une troisième ouverture (31b) qui est adaptée, dans le premier état et le deuxième état, à communiquer avec la troisième chambre d'accueil (31a) dans la première direction (X) ;
dans laquelle, dans le premier état, une longueur de chaque première plaque (41) dans la première direction (X) est identique à celle d'une paroi latérale (12) respective dans la première direction (X) ;
dans laquelle le premier corps de boîte (10), le deuxième corps de boîte (20) et le troisième corps de boîte (30) sont formés chacun dans une structure rectangulaire ;
dans laquelle le deuxième état comprend un premier sous-état et un deuxième sous-état, et la boîte d'emballage est commuable entre le premier sous-état et le deuxième sous-état ; et
dans le premier sous-état, les plaques de liaison (40) disposées par paires sont respectivement disposées sur deux côtés du premier corps de boîte (10) dans la deuxième direction (Y), et dans le deuxième sous-état, les plaques de liaison (40) disposées en paires sont toutes disposées à la partie inférieure du premier corps de boîte (10) ;
dans laquelle, dans le premier état, les premières plaques (41) disposées par paires sont respectivement attachées à parois latérales (12) du premier corps de boîte (10) dans la deuxième direction (Y) ;
dans laquelle, dans le deuxième état, les premières plaques (41) disposées par paires sont respectivement au moins partiellement séparées des parois latérales (12) ;
dans laquelle chacune des deuxièmes plaques (42) comprend une première sous-plaque (421) et une deuxième sous-plaque (422) qui sont pliables l'une par rapport à l'autre et reliées l'une à l'autre, la première sous-plaque (421) est disposée entre la première plaque (41) correspondante et la deuxième sous-plaque (422) et est pliable par rapport à la première plaque (41) correspondante et reliée à celle-ci et à la deuxième sous-plaque (422), l'une des deuxièmes sous-plaques (422) disposées par paires est adaptée à fermer la deuxième ouverture (21b), et l'autre des deuxièmes sous-plaques (422) disposées par paires est adaptée à fermer la troisième ouverture (31b) ;
**caractérisé en ce que,**
dans le premier état, une longueur de chaque première plaque (41) dans la première direction (X) est identique à celles du deuxième corps de boîte (20) et du troisième corps de boîte (30) dans la deuxième direction (Y).

2. Boîte d'emballage selon la revendication 1, dans laquelle,
selon la première direction (X), la paroi inférieure (13) est espacée de la première portion d'accueil (11), et une cavité (13a) est formée entre la paroi inférieure (13) et la première portion d'accueil (11).

3. Boîte d'emballage selon la revendication 1, dans laquelle,
la boîte d'emballage comprend en outre une pluralité d'éléments magnétiques, et le premier corps de boîte (10), le deuxième corps de boîte (20), le troisième corps de boîte (30) et l'ensemble de liaison sont respectivement pourvus des éléments magnétiques.
